# EUROPEAN PATENT APPLICATION

(11) **EP 4 130 815 A1**
(43) Date of publication of application: **08.02.2023**
(21) Application number: 21781980.4
(22) Date of filing: 23.03.2021
(51) Int. Cl.: G02B 5/30, B60J 1/02, B60K 37/00

(54) **REFLECTION PREVENTION STRUCTURE**

(30) Priority: 02.04.2020 JP 2020066536
(71) Applicant: Nitto Denko Corporation, Ibaraki-shi, Osaka 567-8680 (JP)
(72) Inventor: TAKADA, Katsunori, Ibaraki-shi, Osaka 567-8680 (JP)
(74) Representative: Hoffmann Eitle
(86) International application number: PCT/JP2021/011922
(87) International publication number: WO 2021/200387

(57) **Abstract**

Provided is a structural body including a transparent plate and an interior member, the structural body being prevented from causing the reflection of the interior member on the transparent plate. The refection-preventing structural body of the present invention includes a transparent plate and an interior member. The transparent plate is arranged at the position at which reflected light on the interior member arrives, and the interior member is configured to reflect a larger quantity of P-polarized light than that of S-polarized light toward the transparent plate. In one embodiment, the reflection-preventing structural body is a vehicle interior structure.

## Description

### Technical Field

The present invention relates to a reflection-preventing structural body, and more specifically, to a structural body including a transparent plate and an interior member, the structural body being prevented from causing reflection of the interior member on the transparent plate.

### Background Art

In a vehicle such as an automobile, an interior member such as an instrument panel is required to be subjected to various kinds of decoration for improving its design property. However, when the reflected image of the interior member is reflected on a vehicle window, the decoration is limited from the viewpoint of the visibility of the front of the vehicle. For example, there is a problem in that the upper surface of the instrument panel cannot be subjected to decoration having a light color. When the vehicle is mounted with a camera for taking an image of the front of the vehicle such as a dashboard camera, the reflection on the vehicle window becomes a problem from the viewpoint of the exhibition of the performance of the camera. In addition, the reflection of an interior member image on a window may become a problem in an architecture, such as a house or a building.

### Citation List

### Patent Literature

[PTL 1] JP 2014-084071 A

### Summary of Invention

### Technical Problem

The present invention has been made to solve the above-mentioned problems, and an object of the present invention is to provide a structural body including a transparent plate and an interior member, the structural body being prevented from causing the reflection of the interior member on the transparent plate.

### Solution to Problem

According to one embodiment of the present invention, there is provided a refection-preventing structural body, including: a transparent plate; and an interior member, wherein the transparent plate is arranged at a position at which reflected light on the interior member arrives, and wherein the interior member is configured to reflect a larger quantity of P-polarized light than that of S-polarized light toward the transparent plate.

In one embodiment, the interior member has a surface having an angle of from 20° to 120° with respect to the transparent plate.

In one embodiment, the interior member has a polarizing function.

In one embodiment, the interior member includes a polarizing plate.

In one embodiment, the reflection-preventing structural body is a vehicle interior structure.

In one embodiment, the transparent plate is a vehicle windshield.

In one embodiment, the interior member is a vehicle instrument panel.

### Advantageous Effects of Invention

According to the present invention, the structural body including the transparent plate and the interior member, the structural body being prevented from causing the reflection of the interior member on the transparent plate, can be provided.

### Brief Description of Drawings

FIG. 1 is a schematic view of a reflection-preventing structural body according to one embodiment of the present invention.
FIG. **2** is a schematic sectional view of an interior member in one embodiment of the present invention.
FIGS. **3** are photographic views for showing the contents of Reference Example.

### Description of Embodiments

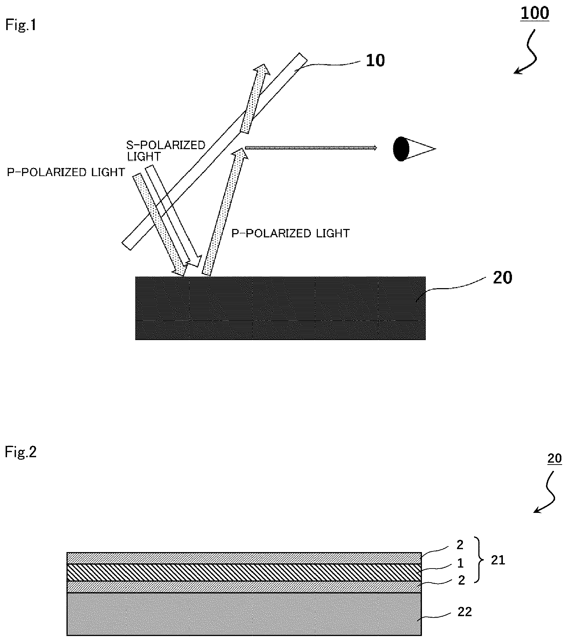

FIG. **1** is a schematic view of a reflection-preventing structural body according to one embodiment of the present invention. A reflection-preventing structural body **100** according to this embodiment includes a transparent plate **10** and an interior member **20.** The transparent plate **10** is arranged at the position at which reflected light on the interior member **20** arrives.

The interior member **20** is configured to reflect a larger quantity of P-polarized light than that of S-polarized light toward the transparent plate **10.** The reflectance of the S-polarized light on the transparent plate is high, and the reflectance of the P-polarized light on the transparent plate is low. Accordingly, the arrival of light rich in P-polarized light at the transparent plate reduces reflection resulting from light reflected on the interior member **20.**

In one embodiment, the reflection-preventing structural body may be a vehicle interior structure. In this case, the transparent plate **10** is a vehicle window (e.g., a windshield). In addition, examples of the interior member **20** include an instrument panel and a door rim. In one embodiment, the transparent plate **10** is a vehicle windshield. In addition, in one embodiment, the interior member 20 is an instrument panel. When the transparent plate **10** is a windshield, and the interior member **20** is an instrument panel, the interior member (instrument panel) **20** is arranged below the transparent panel (windshield) **10.** In other words, when the transparent plate **10** is a vehicle windshield, and the interior member **20** is an instrument panel, the structural body is configured so that at least part of the interior member (instrument panel) **20** and the projection of the transparent panel (windshield) **10** in a vertical direction may overlap each other.

### (Interior Member)

As described above, the interior member is configured to reflect a larger quantity of P-polarized light than that of S-polarized light. In one embodiment, the interior member configured as described above has a polarizing function. Any appropriate material may be used as a material that expresses polarization, and examples thereof include: a polarizing plate; and a resin material having incorporated thereinto iodine, a dye, a liquid crystal, or the like.

The interior member preferably has a surface having an angle of from 20° to 120° with respect to the transparent plate, more preferably has a surface having an angle of from 30° to 90° with respect thereto, and still more preferably has a surface having an angle of from 40° to 70° with respect thereto. When the interior member and the transparent plate are arranged at such angle, P-polarized light reflected on the interior member can be caused to enter the transparent plate at an angle close to Brewster's angle. As a result, the reflection of the interior member can be preferably prevented. When the interior member has a curved surface, an angle between the curved surface and the interior member is specified by the tangent plane of the curved surface.

FIG. **2** is a schematic sectional view of the interior member in one embodiment of the present invention. The interior member **20** includes a polarizing plate **21.** In one embodiment, the polarizing plate **21** may be arranged on one side of a substrate **22.**

The substrate **22** may be, for example, an instrument panel main body, and may be a formed body formed of a low-density resin, such as polypropylene, foamed polypropylene, polyvinyl chloride, or acrylonitrile-styrene acrylate. The surface of the substrate **22** on the polarizing plate **21** side may be a design surface, and may be, for example, a surface having a light color or a surface having a glossy feeling. In the present invention, an interior member that reflects a larger quantity of P-polarized light than that of S-polarized light is formed. Accordingly, the reflection of the interior member on the transparent plate is prevented, and hence there is no need to limit the design property of the interior member.

The polarizing plate **21** includes a polarizer **1.** The polarizing plate **21** typically further includes a protective film **2** arranged on at least one side of the polarizer **1.** In one embodiment, the polarizer is an absorption-type polarizer.

The polarizing plate is preferably arranged so that a plane including the transmission axis of the polarizer and the normal of the polarizing plate, and the transparent plate may be substantially perpendicular to each other. Such arrangement enables the formation of an interior member that reflects a larger quantity of P-polarized light than that of S-polarized light. The phrase "substantially perpendicular" is a concept including not only a case in which both the planes are strictly perpendicular to each other but also a case in which an angle formed by both the planes is 90°±10° (preferably 90°±5°).

The thickness of the polarizing plate is preferably from 5 um to 300 µm, more preferably from 10 um to 250 µm, still more preferably from 25 um to 200 µm, particularly preferably from 25 um to 100 µm.

The thickness of the polarizer is not particularly limited, and an appropriate thickness may be adopted depending on purposes. The thickness is typically from about 1 um to about 80 µm.

The polarizer preferably exhibits absorption dichroism at any wavelength in the wavelength range of from 380 nm to 780 nm. The polarizer has a single layer transmittance of preferably 35% or more, more preferably 38% or more, still more preferably 40% or more, particularly preferably 42% or more. The polarizer has a polarization degree of preferably 90% or more, more preferably 92% or more, still more preferably 95% or more, particularly preferably 98% or more.

The polarizer is preferably an iodine-based polarizer. More specifically, the polarizer may be formed of an iodine-containing polyvinyl alcohol-based resin (hereinafter referred to as "PVA-based resin") film.

Any appropriate resin may be adopted as a PVA-based resin for forming the PVA-based resin film. Examples of the resin include polyvinyl alcohol and an ethylene-vinyl alcohol copolymer. The polyvinyl alcohol is obtained by saponifying polyvinyl acetate. The ethylene-vinyl alcohol copolymer is obtained by saponifying an ethylene-vinyl acetate copolymer. The saponification degree of the PVA-based resin is typically from 85 mol% to 100 mol%, preferably from 95.0 mol% to 99.95 mol%, more preferably from 99.0 mol% to 99.93 mol%. The saponification degree may be determined in conformity with JIS K 6726-1994. The use of the PVA-based resin having such saponification degree can provide a polarizer excellent in durability. When the saponification degree is excessively high, gelling may occur.

The average polymerization degree of the PVA-based resin may be appropriately selected depending on purposes. The average polymerization degree is typically from 1,000 to 10,000, preferably from 1,200 to 5,000, more preferably from 1,500 to 4,500. The average polymerization degree may be determined in conformity with JIS K 6726-1994.

A method of obtaining the polarizer from the PVA-based resin film is generally a method of producing the polarizer through a series of treatment processes including swelling, dyeing, cross-linking, stretching, water washing, and drying. At this time, the order of the respective treatments, that is, the swelling, the dyeing, the cross-linking, the stretching, the water washing, and the drying in each treatment process, the number of times of each of the treatments, and whether or not each of the treatments is performed are not particularly limited, and some of the treatments may be simultaneously performed in one treatment process, or some of the treatments may not be performed. For example, the stretching treatment may be performed after the dyeing treatment, or may be performed simultaneously with, for example, the swelling treatment and the dyeing treatment. In addition, the dyeing treatment may be performed after the stretching treatment has been performed. Further, a method including performing the cross-linking treatment before or after the stretching treatment is used. In addition, a method of producing the polarizer is not limited to the above-mentioned production method, and the polarizer may be produced by using any other production method. For example, a dry stretching method may be used, or a polarizer, which is obtained by kneading a dichroic substance into a polymer film made of polyethylene terephthalate (PET) or the like, forming the kneaded product into a film, and stretching the film, is permitted. Alternatively, for example, an O-type polarizer obtained by incorporating, into a liquid crystal aligned in a uniaxial direction, which serves as a host, a dichroic dye serving as a guest (US 5523863 A or JP 03-503322 A), or an E-type polarizer using a dichroic lyotropic liquid crystal (US 6049428 A) is permitted.

Any appropriate resin film may be adopted as the protective film. A material for forming the protective film is, for example, a polyester-based resin such as polyethylene terephthalate (PET), a cellulose-based resin such as triacetylcellulose (TAC), a cycloolefin-based resin such as a norbornene-based resin, an olefin-based resin, such as polyethylene or polypropylene, or a (meth)acrylic resin. Of those, polyethylene terephthalate (PET) is preferred. The term " (meth) acrylic resin" refers to an acrylic resin and/or a methacrylic resin.

The protective film and the polarizer are laminated via any appropriate adhesive layer.

The thickness of the protective film is preferably from 4 um to 250 µm, more preferably from 5 um to 150 µm, still more preferably from 10 um to 100 µm, particularly preferably from 10 um to 50 µm.

The interior member may have any appropriate configuration in addition to the embodiment illustrated in FIG. 2 as long as the effect of the present invention is obtained. For example, a configuration in which the polarizing plate includes a wire grid polarizer is permitted. In addition, an interior member (e.g., an instrument panel) formed from a resin composition containing a resin component and a polarizing component (e.g., a polarizer (iodine), a dye, or a liquid crystal) may be used as the interior member. The resin component is not particularly limited, and may be, for example, an acrylic resin, an epoxy-based resin, polypropylene, foamed polypropylene, polyvinyl chloride, or acrylonitrile-styrene acrylate. In addition, a polarizing layer may be formed by coating. For example, the polarizing layer may be formed on the substrate by coating the substrate with a liquid crystal material containing a dichroic dye (e.g., phthalocyanine).

### (Transparent Plate)

The transparent plate may have any appropriate configuration. A material for forming the transparent plate is, for example, glass or a resin material having translucency.

The total light transmittance of the transparent plate is preferably 50% or more, more preferably 70% or more.

### Examples

The present invention is specifically described below by way of Example (Reference Example), but the present invention is not limited to Example.

### [Reference Example]

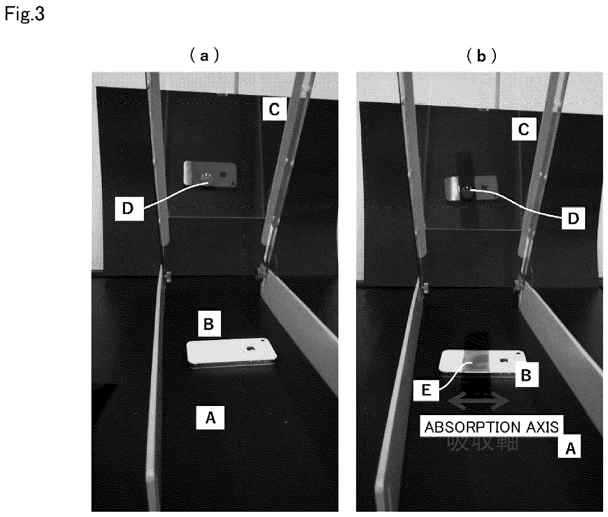

As shown in FIG. **3(a)****,** a light-colored object B was arranged on a black desk A, and the desk and the object were regarded as an interior member. In addition, a glass plate (transparent plate) C was arranged above the desk A having arranged thereon the light-colored object B so that an angle formed by the desk A and the glass plate C became 60°. Further, a red object D was arranged on the front of the glass plate C opposite to the desk A. The reflection of the light-colored object B on the glass plate C and the visibility of the red object through the glass plate C (i.e., front visibility) were recognized with such demonstration machine. According to the configuration, the reflection of the light-colored object B was observed, and the reflection inhibited the visibility.

Further, as shown in FIG. **3 (b)**, a polarizing plate D was arranged on the light-colored object B so that the absorption axis of its polarizer was as shown in the shown example (i.e., so that a plane including the transmission axis of the polarizer and the normal of the polarizing plate, and the transparent plate serving as a protective plate became substantially perpendicular to each other) . The configuration in which the polarizing plate E and the light-colored obj ect B are laminated corresponds to an interior member "configured to reflect a larger quantity of P-polarized light than that of S-polarized light." According to such configuration, the reflection of the light-colored object B was prevented, and hence an improvement in front visibility was able to be achieved.

### Reference Signs List

- **10**: transparent plate
- **20**: interior member
- **100**: reflection-preventing structural body

## Claims

1. A refection-preventing structural body, comprising:
a transparent plate; and
an interior member,
wherein the transparent plate is arranged at a position at which reflected light on the interior member arrives, and
wherein the interior member is configured to reflect a larger quantity of P-polarized light than that of S-polarized light toward the transparent plate.

2. The reflection-preventing structural body according to claim 1, wherein the interior member has a surface having an angle of from 20° to 120° with respect to the transparent plate.

3. The reflection-preventing structural body according to claim 1 or 2, wherein the interior member has a polarizing function.

4. The reflection-preventing structural body according to any one of claims 1 to 3, wherein the interior member includes a polarizing plate.

5. The reflection-preventing structural body according to any one of claims 1 to 4, wherein the reflection-preventing structural body is a vehicle interior structure.

6. The reflection-preventing structural body according to claim 5, wherein the transparent plate is a vehicle windshield.

7. The reflection-preventing structural body according to claim 5 or 6, wherein the interior member is a vehicle instrument panel.
